# EUROPEAN PATENT APPLICATION

(11) **EP 1 542 466 A1**
(43) Date of publication of application: **15.06.2005**
(21) Application number: 03797603.2
(22) Date of filing: 16.09.2003
(51) Int. Cl.: H04N 7/14

(54) **SIGN LANGUAGE VIDEO PRESENTATION DEVICE, SIGN LANGUAGE VIDEO I/O DEVICE, AND SIGN LANGUAGE INTERPRETATION SYSTEM**

(30) Priority: 17.09.2002 JP 2002269851
(71) Applicant: Ginganet Corporation, Osaka-shi, Osaka 556-0017 (JP)
(72) Inventor: SAHASHI, Nozomu, Kishiwada-shi, Osaka 596-0045 (JP)
(74) Representative: Zimmermann, Tankred Klaus
(86) International application number: PCT/JP2003/011758
(87) International publication number: WO 2004/028162

(57) **Abstract**

A sign language video presentation device, a sign language video input/output device, and a sign language interpretation system using the same enabling a deaf-mute person to get explanation by sign language while viewing the outer world by freely shifting his/her sight line are provided.

The sign language video presentation device includes a display device (12) for displaying a sign language video, a fixing device (13) for fixing the display device (12) in front of the eyes of the deaf-mute person, and a videophone connection device (16) for supplying the display device (12) with a sign language video being received by a videophone terminal (10).

The sign language video input/output device includes a sign language imaging camera (14) for picking up the sign language of the deaf-mute person to the sign language video presentation device and a waist fixing device (15) for fixing the sign language imaging camera (14) at the waist of the deaf-mute person, so that the sign language of the deaf-mute person picked up by the sign language imaging camera (14) is supplied to the video telephone terminal (10). The sign language interpretation system (100) provides a sign language interpretation service when a deaf-mute person converses with a non-deaf-mute person by using the sign language video input/output device.

## Description

### Technical Field

The present invention relates to a sign language video presentation device which presents a sign language video by using communications means such as a videophone to a deaf-mute person, a sign language video input/output device which inputs/outputs a sign language video, and a sign language interpretation system which provides a sign language interpretation service by way of a videophone, and in particular to a sign language video presentation device, a sign language video input/output device, and a sign language interpretation system preferable in case a deaf-mute person who is on the road converses with a non-deaf-mute person incapable of using sign language while assisted by a sign language interpretation service via a videophone.

### Background Art

A deaf-mute person who is hearing and speaking impaired wishing to communicate on the road with a non-deaf-mute person incapable of using sign language has to use communications in writing or find a person capable of using sign language. Fluent conversation is difficult by way of communications in writing. Moreover, for communications using sign language, a very small number of non-deaf persons can use sign language. These problems present a high barrier in the social life of a deaf-mute person.

A conversation using sign language over a videophone is available at a practical level with the advancement of communications technologies. It is possible to provide a sign language interpretation service via a videophone.

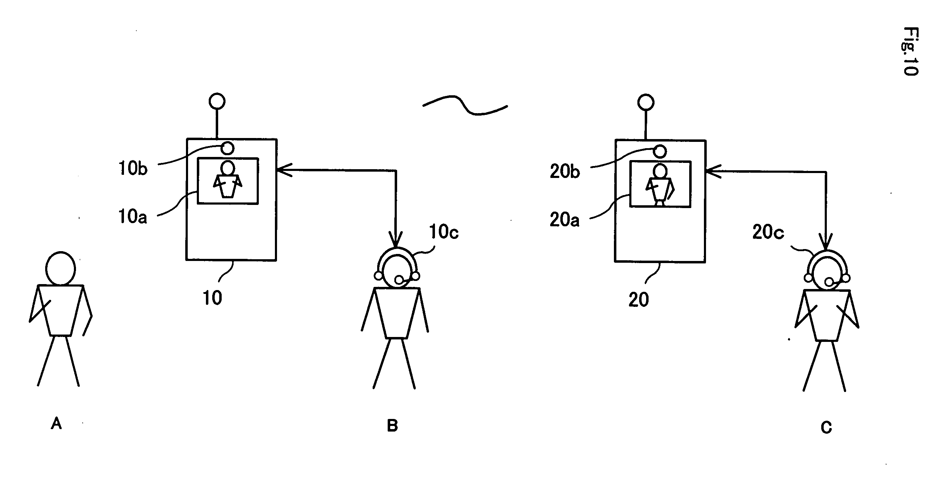

Fig. 10 is a conceptual diagram showing a case where a deaf-mute person away from home converses with a non-deaf-mute person incapable of using sign language, by way of a sign language interpretation service using a prior art videophone terminal such as a cellular phone equipped with a videophone function. As shown in Fig. 10, a deaf-mute person A sets a videophone terminal 10 while watching a video display section 10a of the videophone terminal 10 so that his/her sign language is picked up in an imaging section 10b. At the same time, the deaf-mute person A asks a non-deaf-mute person B as a conversation partner to wear a headset 10c for audio input/output of the videophone terminal 10, then calls a videophone terminal 20 of a sign language interpreter C in charge of a sign language interpretation service. Before starting sign language interpretation, the sign language interpreter C sets a videophone terminal 20 while watching a video display section 10a of the videophone terminal 20 so that his/her sign language will appear in an imaging section 20b, and wears his/her headset 20c for audio input/output.

While the sign language of the deaf-mute person A is not directly understood by the non-deaf-mute person B, the video of the sign language is picked up by an imaging section 10b of the videophone terminal 10, transmitted to the videophone terminal 20 and displayed on the video display section 20a, so that the sign language interpreter C can translate the sign language of the deaf-mute person A into a voice while watching the video and the voice of the sign language interpreter C is collected by the microphone of the headset 20c, transmitted to the videophone terminal 10, and output to the earphone of the headset 10c. The non-deaf-mute person B listens to the voice of the sign language interpreter C to understand the sign language of the deaf-mute person A.

While the voice of the non-deaf-mute person B is not directly heard by the deaf-mute person A, his/her voice is collected by the microphone of the headset 10c of the videophone terminal 10, transmitted to the videophone terminal 20, and output to the earphone of the headset 20c. The sign language interpreter C can translate the voice of the non-deaf-mute person B while hearing his/her voice into the sign language, the sign language of the sign language interpreter is picked up by the imaging section 20b and transmitted to the videophone terminal 10 and displayed on the display section 10a. The deaf-mute person A watches the sign language of the sign language interpreter C to understand the voice of the non-deaf-mute person.

In this way, by using a videophone, the deaf-mute person A and the non-deaf-mute person B can communicate with each other by calling the sign language interpreter C, even when they are away.

While an example has been described where the sign language interpreter uses a same videophone terminal of the cellular phone type as that used by the deaf-mute person and the non-deaf-mute person, a sign language interpretation center which provides a sign language interpretation service may be constructed and a desktop-type videophone terminal may be used to provide a sign language interpretation service.

However, when the single videophone terminal is used by a deaf-mute person and a non-deaf-mute person to obtain a sign language interpretation service, the deaf-mute person must keep watching the display section of the videophone terminal while the sign language interpreter is translating the voice of the non-deaf-mute person into sign language, without watching the expression or gesture of the non-deaf-mute person as a conversation partner at the same time. This makes quick conversation difficult and presents a problem that a deaf-mute person cannot adequately understand the intention or feeling of a non-deaf-mute person.

Such a problem of the deaf-mute person's sight line occurs when sign language interpretation is provided, as well as in many cases where the deaf-mute person is given explanation with sign language.

For example, assume a case where a deaf-mute person is riding in a sightseeing bus. During explanation with sign language by a guide, as soon as the guide draws attention of the passengers to the right (left) by using sign language when the bus is at a historic site, the deaf-mute person shifts his/her eyes from the sign language, and fails to get the explanation of the historic site.

Similarly, despite explanation with sign language on a sightseeing spot or in an exhibition, a deaf-mute person cannot see a real object while listening to the explanation, so that he/she may fail to appreciate the scene or fail to get an impression which should be given.

An unimpaired person can hear the explanation given so that he/she can shift his/her sight line. A deaf-mute person must keep watching the person performing sign language and is thus handicapped to a great extent.

A main object of the invention is to provide a sign language video presentation device, a sign language video input/output device, and a sign language interpretation system which enable a deaf-mute person to get explanation by sign language while viewing the outer world by freely shifting his/her sight line.

### Disclosure of the Invention

The invention described in claim 1 is a sign language video presentation device comprising: sign language video receiving means for receiving a sign language video; display means for displaying a sign language video received by the sign language video receiving means; and fixing means for fixing the display means in front of the eyes of the deaf-mute person, characterized in that the deaf-mute person can view the sign language video received by the sign language video receiving means at the same time he/she views the outer world.

With this configuration, the deaf-mute person gets explanation sign language while viewing the outer world by freely shifting his/her sight line. The display means fixed in front of the eyes of the deaf-mute person is preferably small enough so as not to hamper viewing of the outer world.

The invention described in claim 2 is the sign language video presentation device according to claim 1, characterized in that the display means comprises a convex lens which can substantially focus on a sign language video displayed on the display means at the same time when the deaf-mute person views the outer world.

With this configuration, the deaf-mute person can watch a sign language video displayed on the display means without making focus adjustment of eyeballs when he/she views the outer world. The sign language video displayed on the display means is enlarged by the convex lens so that the size of the display device is reduced.

The invention described in claim 3 is the sign language video presentation device according to claim 1 or 2, characterized in that the fixing means has a frame structure which can be fixed to the ears and nose of a deaf-mute person.

With this configuration, the deaf-mute person can readily set the display means at the optimum position in front of his/her eyes, which adds to the convenience to the deaf-mute person.

The invention described in claim 4 is the sign language video presentation device according to any one of claims 1 through 3, characterized in that the sign language video receiving means comprises videophone connection means to be connected to a videophone terminal.

With this configuration, the deaf-mute person can use a general-purpose videophone terminal to get explanation by sign language while viewing the outer world by freely shifting his/her sight line.

In particular, the videophone connection means can be connected to a videophone of the cellular phone type so that the deaf-mute person can get explanation by sign language while viewing the outer world by freely shifting his/her sight line even when he/she is on the road. This adds to the convenience to the deaf-mute person.

The invention described in claim 5 is the sign language video presentation device according to claim 4, characterized in that the videophone connection means comprises radio communications means for performing radio communications with the videophone terminal.

With this configuration, it is no longer necessary to connect the sign language video presentation device with a videophone terminal via a cable, which greatly facilitates system handling.

The invention described in claim 6 is a sign language video input/output device comprising the sign language video presentation device according to any one of claims 1 through 3, characterized in that the sign language video input/output device includes sign language imaging means for picking up the sign language of the deaf-mute person and sign language video transmission means for transmitting a sign language video picked up by the sign language imaging means.

With this configuration, the deaf-mute person can transmit his/her sign language to the opponent party while viewing the sign language of the opponent party, thereby having a bidirectional conversation by way of sign language while viewing the outer world by freely shifting his/her sight line.

The invention described in claim 7 is a sign language video input/output device comprising the sign language video presentation device according to claim 4 or 5, characterized in that the sign language video input/output device includes sign language imaging means for picking up the sign language of the deaf-mute person and video transmission means for transmitting a sign language video picked up by the sign language imaging means to the videophone terminal.

With this configuration, the deaf-mute person can use a general-purpose videophone terminal to have a bidirectional conversation by way of sign language while viewing the outer world by freely shifting his/her sight line.

The invention described in claim 8 is the sign language video input/output device according to claim 7, characterized in that the sign language imaging means comprises waist fixing means to be fixed at the waist of the deaf-mute person.

With this configuration, the sign language of the deaf-mute person is picked up and transmitted to the opponent party under certain conditions even when the deaf-mute person changes his/her position or orientation, thereby enabling stable sign language conversation.

The invention described in claim 9 is a sign language interpretation system which provides sign language interpretation in case the sign language video input/output device according to claim 7 or 8 is used by a deaf-mute person capable of using sign language, audio input/output means connected to the videophone terminal is used by a non-deaf-mute person incapable of using sign language, and the videophone terminal and another videophone terminal used by a sign language interpreter are interconnected to allow the deaf-mute person to converse with the non-deaf-mute person, characterized in that the sign language interpretation system comprises connection means equipped with a sign language interpreter registration table where the terminal number of the videophone terminal used by a sign language interpreter is registered, the connection means including a function to accept a call from the videophone terminal used by the deaf-mute person and non-deaf-mute persons, a function to extract the terminal number of a sign language interpreter from the sign language interpreter registration table, and a function to call the videophone terminal used by a sign language interpreter by using the extracted terminal number of the sign language interpreter.

With this configuration, the deaf-mute person obtains a sign language interpretation service with a videophone in a conversation with a non-deaf-mute person, while freely shifting his/her sight line, orientation or position by using the video input/output device according to the invention.

As a function is provided to extract and call the terminal number of a sign language interpreter registered in a sign language interpreter registration table, a sign language interpreter can present a sign language interpretation anywhere he/she may be, as long as he/she can be reached. This provides a flexible and efficient sign language interpretation system.

The invention described in claim 10 is the sign language interpretation system according to claim 9, characterized in that selection information for selecting a sign language interpreter is registered in the sign language interpreter registration table and that the connection means includes a function to acquire the conditions for selecting a sign language interpreter from the calling videophone terminal and a function to extract the terminal number of a sign language interpreter who satisfies the acquired selection conditions for the sign language interpreter from the sign language interpreter registration table.

With this configuration, a sign language interpreter who satisfies the object of the conversation over a videophone between a deaf-mute person and a non-deaf-mute person from among the sign language interpreters registered in the sign language interpreter registration table can be selected.

As the sign language interpreter registration table includes an availability flag to register whether a registered sign language interpreter is available, and the connection means references an availability flag in the sign language interpreter registration table to extract the terminal number of an available sign language interpreter, it is possible to automatically select an available sign language interpreter, thereby eliminating useless calling and providing a more flexible and efficient sign language interpretation system.

The above object, other objects, characteristics and advantages of the invention will be apparent from the following detailed description of the embodiments of the invention made referring to drawings.

### Brief Description of the Drawings

Fig. 1 is a block diagram of a sign language video input/output device according to an embodiment of the invention;
Fig. 2 is a system block diagram of a sign language interpretation system according to an embodiment of the invention;
Fig. 3 is a processing flowchart of a controller in a sign language interpretation system according to an embodiment of the invention;
Fig. 4 shows an example of a sign language interpreter registration table;
Fig. 5 shows an example of a screen for prompting input of sign language interpreter selection conditions;
Fig. 6 shown an example of a screen for displaying list of sign language interpreter candidates;
Fig. 7 is a system block diagram of a sign language interpretation system according to another embodiment of the invention;
Fig. 8 shows an example of a connection table;
Fig. 9 is a processing flowchart of a controller in a sign language interpretation system according to another embodiment of the invention; and
Fig. 10 is a conceptual diagram showing a case where a sign language interpretation service is obtained by using a prior art videophone terminal.

### Best Mode for Carrying Out the Invention

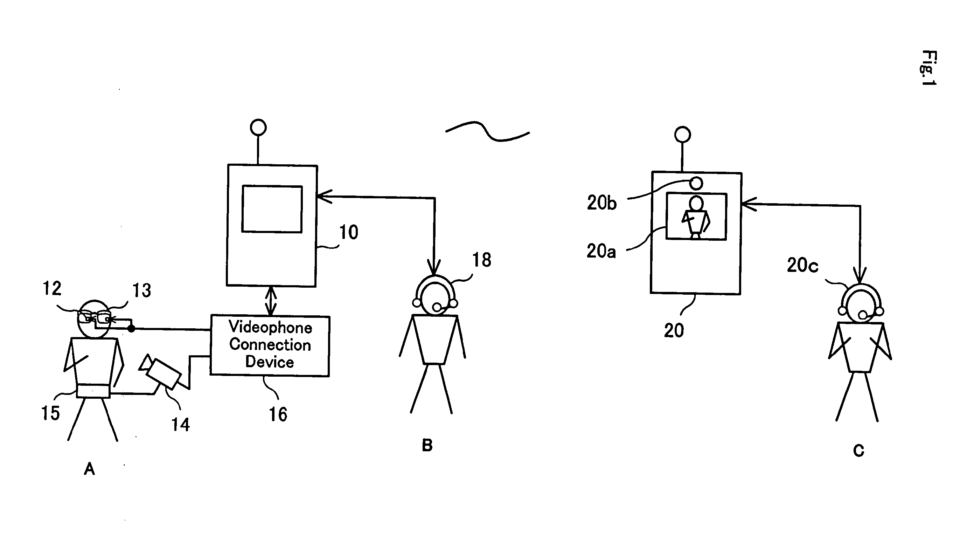

Fig. 1 is a block diagram of a sign language video input/output device according to an embodiment of the invention. This embodiment shows a case where a deaf-mute person A who is away from home uses a videophone to call a sign language interpreter C in order to have a conversation with a non-deaf-mute person B incapable of using sign language.

In Fig. 1, a numeral 10 represents a videophone terminal for sign language interpretation recipients (hereinafter referred to as a sign language interpretation recipients terminal) used by a deaf-mute person A or a non-deaf-mute person B in order to obtain a sign language interpretation service. A numeral 20 represents a videophone terminal for sign language interpreters (hereinafter referred to as a sign language interpreter terminal) used by a sign language interpreter.

The sign language interpretation recipients terminal 10 comprises, as equipment for a deaf-mute person A, a display device 12 for displaying a sign language video, a fixture 13 for setting the display device 12 in front of the eyes of the deaf-mute person, a sign language imaging camera 14 for picking up the sign language of the deaf-mute person, a waist fixture 15 for fixing the sign language imaging camera 14 at the waist of the deaf-mute person, and a sign language video input/output device including the display device 12 and a videophone connection device 16 for connecting the sign language imaging camera 14 to the videophone terminal 10. The sign language interpretation recipients terminal 10 also comprises, as equipment for a non-deaf-mute person B, a headset for audio input/output 18.

The sign language interpreter terminal 20 also comprises a video display section 20a for displaying a video, an imaging section 20b for picking up the sign language of a sign language interpreter, and a headset for audio input/output 20c.

The display device 12 uses for example a small-sized liquid crystal display having a sufficient resolution to display a sign language video. The display device 12 enlarges a video so that a deaf-mute person can recognize sign language displayed with the fixture 13 attached. On the surface of the display device 12 is attached a convex lens so that sign language displayed on the display device 12 is substantially brought into focus while the deaf-mute person is viewing the outer world such as the conversation partner and the scenery. This allows the deaf-mute person to normally recognize the sign language displayed on the display device 12 while viewing the outer world.

The fixture 13 has a spectacle frame structure which can be fixed to the ears and nose of a deaf-mute person. Near the frame in front of the eyes of the deaf-mute person is attached the display device 12 for viewing of sign language without impairing the sight of the outer world. While the display device 12 is provided in lower left position in front of the eyes of the deaf-mute person in this example, it may be provided anywhere as long as it does not impair the sight of the outer world.

While the display devices 12 are provided on the same right and left positions of the fixture 13 so as to more clearly recognize the displayed sign language in this example, the display unit 12 may be provided on either side of the fixture 13 as long as the deaf-mute person can recognize the displayed sign language.

The fixture 13 is used to set the display device 12 in front of the eyes of the deaf-mute person, so that the display device 12 may be fixed to a hollow frame. Or, a transparent plate may be provided in a frame and the display unit 12 may be stuck to the transparent plate. In case the deaf-mute person has myopia, hyperopia, astigmatism, or presbyopia and thus needs a corrective lens, a corrective lens may be provided in a frame and the display device 12 may be stuck to the corrective lens.

The sign language imaging camera 14 which may be a small-sized CCD camera is fixed to the waist fixture 15. In this practice, the sign language imaging camera 14 is set to an angle of view wide enough to pick up the sign language of the deaf-mute person while it is fixed to the waist fixture 15.

The waist fixture 15 is for example a belt to fix at the waist of a deaf-mute person. Any waist fixture may be used whose buckle has an arm for fixing the sign language imaging camera 14 to allow the sign language imaging camera 14 to be set in an orientation where the sign language of the deaf-mute person can be picked up. This makes it possible to stably pick up the sign language of the deaf-mute person by using the sign language imaging camera 14 even when the deaf-mute person changes his/her position or orientation.

The videophone connection device 16 is a device which connects the display device 12 and the sign language imaging camera 14 with the external device connecting terminal of the videophone terminal 10. The videophone connection device 16 supplies a video signal being received by the videophone terminal 10 to the display device 12 as well as supplies a video signal from the sign language imaging camera 14 to the videophone terminal 10. Thus the display device 12 serves as an external video display device of the videophone terminal 10 and the sign language imaging camera 14 serves as an external video input device of the videophone terminal 10.

Next, the operation for a conversation between the deaf-mute person A and the non-deaf-mute person B via the sign language interpreter C by using such a sign language video input/output device will be described.

The deaf-mute person A wears the fixture 13 and the waist fixture 15 and connects the videophone connection device 16 to the external device connection terminal of the sign language interpretation recipient terminal 10.

The non-deaf-mute person B wears the headset 18 and connects the headset 18 to the audio input/output terminal of the sign language interpretation recipient terminal 10.

In this state, the deaf-mute person A or the non-deaf-mute person B calls the sign language interpreter terminal 20 used by a sign language interpreter from the sign language interpretation recipient terminal 10.

The sign language interpreter C accepts the request for sign language interpretation, sets the sign language interpreter videophone terminal 20 while watching the video display section 20a so that his/her sign language will appear in the imaging section 20b, and wears the headset 20a and connects it to the audio input/output terminal of the sign language interpreter videophone terminal 20.

When the deaf-mute person A performs sign language, its video is picked up by the sign language imaging camera 14, transmitted from the sign language interpretation recipient terminal 10 to the sign language interpreter terminal 20, and displayed in the video display section 20a. The sign language interpreter C can watch the sign language of the deaf-mute person A displayed in the video display section 20a and translate the sign language into a voice. The voice translated into by the sign language interpreter C is collected by the microphone of the headset 20c, transmitted from the sign language interpreter terminal 20 to the sign language interpretation recipient terminal 10, and output to the earphone of the headset 18. The non-deaf-mute person B listens to the voice translated into by the sign language interpreter C to understand the sign language of the deaf-mute person A.

On the other hand, the voice of the non-deaf-mute person B is collected by the microphone of the headset 18, transmitted from the sign language interpretation recipient terminal 10 to the sign language interpreter terminal 20, and output to the earphone of the headset 20c. The sign language interpreter C listens to the voice of the non-deaf-mute person B and translates it into sign language. The sign language translated into by the sign language interpreter C is picked up by the imaging section 20b, transmitted from the sign language interpreter terminal 20 to the sign language interpretation recipient terminal 10, and displayed on the display device 12. The deaf-mute person A watches the sign language translated into by the sign language interpreter C to understand the voice of the non-deaf-mute person B.

The sign language translated into by the sign language interpreter C is displayed on the display device 12 fixed by the fixture 13 in front of the eyes of the deaf-mute person A. Thus the deaf-mute person A can converse with the non-deaf-mute person B while freely shifting his/her sight line. The deaf-mute person A can watch the sign language translated into by the sign language interpreter C while checking the expression of the non-deaf-mute person B or watch the sign language translated into by the sign language interpreter C while checking an object as a target of conversation with the non-deaf-mute person B. This provides a quick conversation and deeper understanding of the opponent's intention.

The sign language of the deaf-mute person A is picked up by the sign language imaging camera 14 fixed with the waist fixture 15 and is thus captured stably even when the deaf-mute person A changes his/her position or orientation. This assumes the extreme freedom of the behavior of the deaf-mute person A.

While the fixture 13 for fixing the display device 12 in front of the eyes of a deaf-mute person uses a spectacle frame structure in the above embodiment, the fixture 13 may comprise a hair band fixed on the head equipped with an arm for supporting the display device 12, or may have any structure as long as it can fix the display device 12 in front of the eyes of the deaf-mute person.

While the sign language imaging camera 14 comprises the waist fixture 15 fixed at the waist of the deaf-mute person in the above embodiment, the sign language imaging camera 14 may use any type of fixing means as long as it can pick up the sign language of the deaf-mute person and provides the same effect of the invention.

While the videophone connection device 16 connects the display device 12 and the sign language imaging device 14 with the external device connecting terminal of the videophone terminal 10 via wires in the above embodiment, a radio communications device for wirelessly transmitting/receiving a video signal may be provided on each of the external device connecting terminal of the videophone terminal 10, the fixture 13 and the waist fixture 15. This eliminates the need for cabling the videophone terminal 10, the fixture 13, and the waist fixture 15, which provides extreme ease of handling.

In case the videophone terminal 10 comprises a wireless interface conforming to a Standard such as Bluetooth® for communicating with an external device, a communications device conforming to the same Standard should be provided on each of the fixture 13 and the waist fixture 15. By doing so, it is possible to communicate a video signal without physically connecting anything to the videophone terminal 10 as long as the communications devices provided on the fixture 13 and the waist fixture 15 are within the service area of the wireless interface of the videophone terminal 10, which adds to the ease of handling.

A radio communications device for communicating an audio signal by radio may be provided on the headset 18 for non-deaf-mute persons also to communicate with the sign language interpretation recipient terminal 10 in a cableless fashion. In this case, an audio input/output channel may be provided on the videophone connection device 16 to perform audio communications as well as video signal communications. This allows the non-deaf-mute person B to move freely as long as he/she is within the service area of the radio communications device.

As mentioned earlier, in case the videophone terminal 10 comprises a wireless interface conforming to a Standard to communicate with an external device such as Bluetooth®, a communications device of the same Standard should be used on the headset 18. While audio input/output uses a headset for the non-deaf-mute person B also in the above embodiment, the non-deaf-mute person B does not use sign language so that he/she may use a hand microphone and an external loudspeaker. For a videophone terminal of the cellular phone type, he/she may directly hold the main unit with his/her hands to perform audio communications with the sign language interpreter C.

While the above embodiment describes a videophone terminal of the telephone type, especially a videophone terminal of a cellular phone type, the invention is not limited thereto but a videophone terminal of the IP type to connect to the Internet may be equally used.

While the above embodiment describes a sign language video input/output device comprising both a display device 12 for displaying a sign language video and a sign language imaging camera 14 for picking up sign language, a sign language video presentation device comprising a display device 12 for displaying sign language video, a fixture 13 for fixing the display device 12 in front of the eyes of a deaf-mute person, and a videophone connection device 16 for supplying a sign language video being received by a videophone terminal 10 to the display device 12 may allow a deaf-mute person to get explanation by sign language via a videophone while viewing the outer world by freely shifting his/her sight line, which provides the effect of the invention.

A sign language video need not necessarily be received by a videophone but a dedicated video signal receiver may be used. For example, a transmitter for transmitting as a sign language video the explanation in the sightseeing guidance or exhibition on a sightseeing spot may be provided and the sign language video may be received by a sign language video presentation device. By doing so, same as the audio guidance or explanation for a non-deaf-mute person, a deaf-mute person gets guidance or explanation by sign language while freely shifting his/her sight line, and a deaf-mute person can enjoy sightseeing or a study tour, same as a non-deaf-mute person.

Next, a sign language interpretation system will be described which allows selection of a sign language interpreter satisfying the object of a conversation in case a deaf-mute person converses with a non-deaf-mute person by using a sign language video input/output device according to the invention.

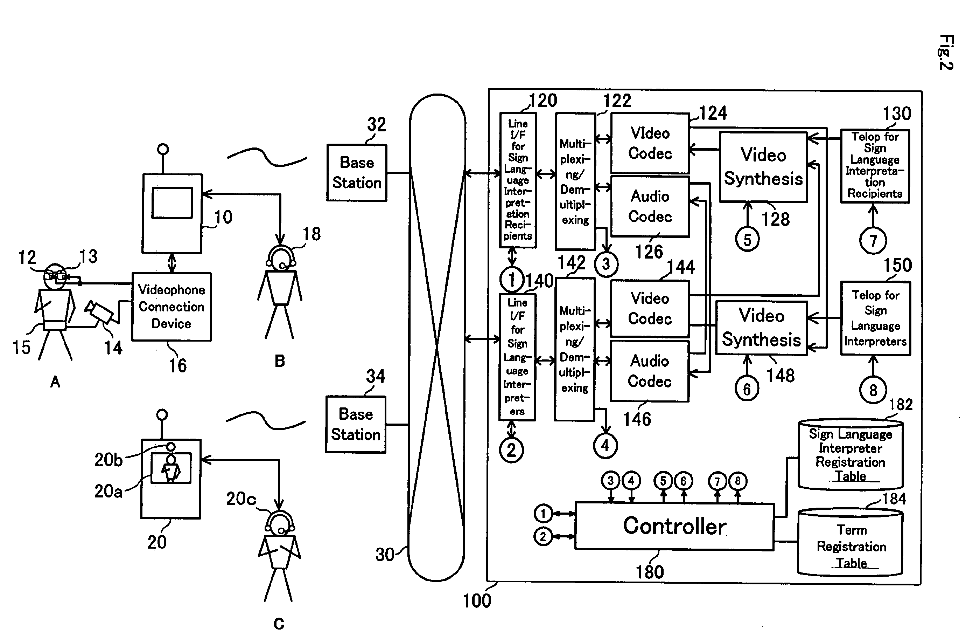

Fig. 2 is a system block diagram of a sign language interpretation system according to an embodiment of the invention. In this embodiment, a deaf-mute person and a non-deaf-mute person uses the sign language video input/output device to propose a sign language interpretation service from a single videophone terminal.

In Fig. 2, a numeral 100 represents a sign language interpretation system installed in a sign language interpretation center which provides a sign language interpretation service. The sign language interpretation system 100 interconnects, via a public telephone line 30, a sign language interpretation recipient terminal 10 used by a deaf-mute person A and a non-deaf-mute person B and a sign language interpreter terminal 20 used by a sign language interpreter C to provide a sign language interpretation service in a conversation between the deaf-mute person and the non-deaf-mute person. In this embodiment, both the sign language interpretation recipient terminal 10 and the sign language interpreter terminal 20 are videophone terminals of the telephone type connected to a public telephone line, and in particular wireless videophone terminals of the cellular phone type which can be carried on the road.

Such a videophone terminal connected to a public line may be an ISDN videophone terminal based on ITU-T recommendation H.320, the invention is not limited thereto and may use a videophone terminal which employs a unique protocol.

The sign language interpretation system 100 comprises a line interface for the sign language interpretation recipient terminal to connect to a sign language interpretation recipient terminal (hereinafter referred to as an I/F) 120 and a line I/F for the sign language interpreter terminal 140 to connect to a sign language interpreter terminal. To each I/F are connected a multiplexer/demultiplexer 122, 142 for multiplexing/demultiplexing a video signal, an audio signal or a data signal, a video CODEC (coder/decoder) 124, 144 for compressing/expanding a video signal, and an audio CODEC 126, 146 for compressing/expanding an audio signal. Each line I/F, each multiplexer/demultiplexer, and each video CODEC or each audio CODEC perform call control, streaming control compression/expansion of a video/audio signal in accordance with a protocol used by each terminal.

To the video input of the video CODEC for the sign language interpretation recipient terminal 124 is connected a video synthesizer 128 for synthesizing the video output of the video CODEC for the sign language interpreter terminal 144 and the output of the telop memory for the sign language interpretation recipient terminal 130.

To the audio input of the audio CODEC for the sign language interpretation recipient 126 is connected the audio output of the audio CODEC for the sign language interpreter terminal 146.

To the video input of the video CODEC for the sign language interpreter terminal 144 is connected a video synthesizer 148 for synthesizing the video output of the video CODEC for the sign language interpretation recipient terminal 124 and the output of the telop memory for the n sign language interpreter terminal 150.

To the audio input of the audio CODEC for the sign language interpreter person terminal 146 is connected the audio output of the audio CODEC for the sign language interpretation recipient terminal 126.

The sign language interpretation system 100 is equipped with a sign language interpreter registration table 182 where the terminal number of a terminal for sign language interpreters used by a sign language interpreter is registered and includes a controller 180 connected to each of the line I/Fs 120, 140, multiplexers/demultiplexers 122, 142, video synthesizers 128, 148, and telop memories 132, 152. The sign language interpretation system 100 provides a function to connect a sign language interpretation recipient terminal and a sign language interpreter terminal by way of a function to accept a call from a sign language interpretation recipient terminal, a function to extract the terminal number of a sign language interpreter from the sign language interpreter registration table 182, a function to call the extracted terminal number, and also provides a function to switch a video/audio synthesis method used by video/audio synthesizers and a function to generate a telop and transmit the telop to a telop memory.

The contents of each telop memory 132, 152 can be set from the controller 180. When a sign language interpretation service with a videophone is established, a message for each terminal is set to each telop memory 132, 152, and a command is issued to each video synthesizer 128, 148 to select a signal of each telop memory 132, 152. Thus a necessary message is transmitted to each terminal and a sign language interpretation connection is established.

In case there is a term which is hard to explain using sign language or a word which is hard to pronounce in a sign language interpretation service with a videophone, it is possible to register in advance the term in the term registration table 184 of the controller 180 in association with the number of the dial pad on each terminal. By doing so, it is possible to detect a push on the dial pad on each terminal during a sign language interpretation service, extract the term corresponding to the number of the dial pad pressed from the term registration table, generate a text telop, and set the text telop to each telop memory, thereby displaying the term on each terminal.

With this configuration, a term which is hard to explain using sign language or a word which is hard to pronounce is transmitted to the opponent party by way of a text telop, thus providing a quicker and more to-the-point sign language interpretation service.

Next, a processing flow of the controller 180 for providing a sign language interpretation service is shown.

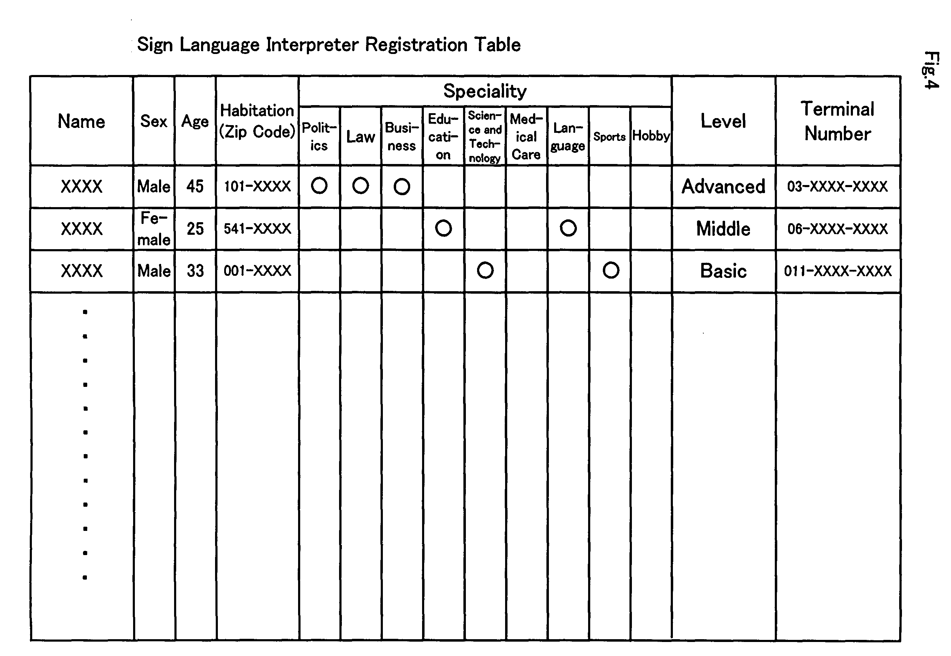

Prior to processing, information to select a sign language interpreter and the terminal number of a terminal used by each sign language interpreter are registered in the sign language interpreter registration table 182 of the controller 180 from an appropriate terminal (not shown). Fig. 4 shows an example of registration item to be registered in the sign language interpreter registration table 182. The information to select a sign language interpreter refers to information used by the user to select a desired sign language interpreter, which includes a sex, an age, a habitation, a specialty, and the level of sign language interpretation. The habitation assumes a case where the user desires a person who has geographic knowledge on a specific area and, in this example, a ZIP code is used to specify an area. The specialty assumes a case where, in case the conversation pertains to a specific field, the user desires a person who has expert knowledge on the field or is familiar with the topics in the field. In this example, the fields a sign language interpreter is familiar with are classified into several categories to be registered, such as politics, law, business, education, science and technology, medical care, language, sports, and hobby. The specialties are diverse, so that they may be registered hierarchically and searched through at a level desired by the user when selected.

In addition, qualifications of each sign language interpreter may be registered in advance for the user to select a qualified person as a sign language interpreter.

The terminal number to be registered is the telephone number of the terminal, because in this example a videophone terminal to connect to a public telephone line is assumed.

In the sign language interpreter registration table 182 is provided an availability flag to indicate whether sign language interpretation can be accepted. A registered sign language interpreter can call the sign language interpretation center from his/her terminal and enter a command by using a dial pad to set/reset the availability flag. Thus, a sign language interpreter registered in the sign language interpreter registration table can set the availability flag only when he/she is available for sign language interpretation, thereby eliminating useless calling and allowing the user to select an available sign language interpreter without delay.

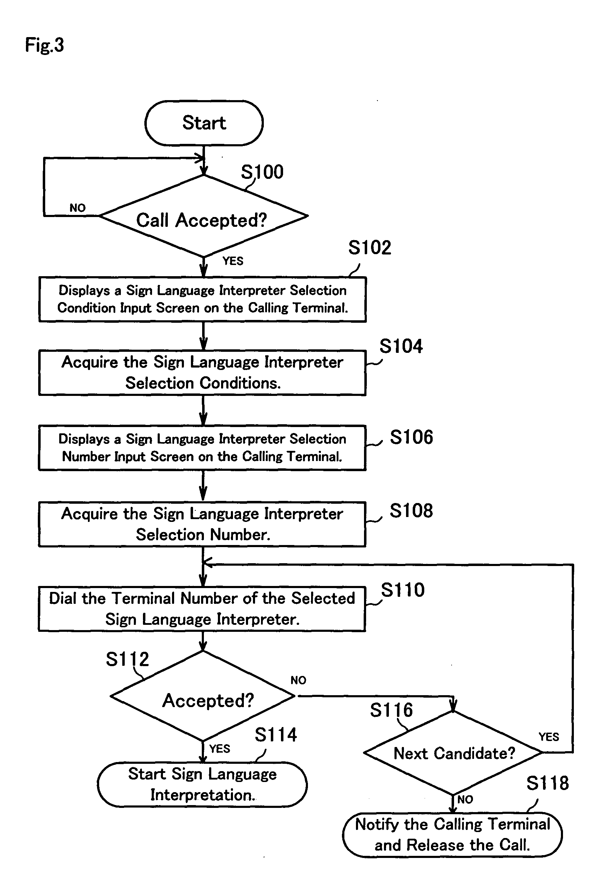

Fig. 3 shows a processing flowchart of the controller 180. In the sign language interpretation system 100, a sign language interpretation recipient terminal makes a call to a telephone number on the line I/F of the sign language interpretation recipient terminal to call a sign language interpreter terminal, thereby establishing a videophone connection via sign language interpretation.

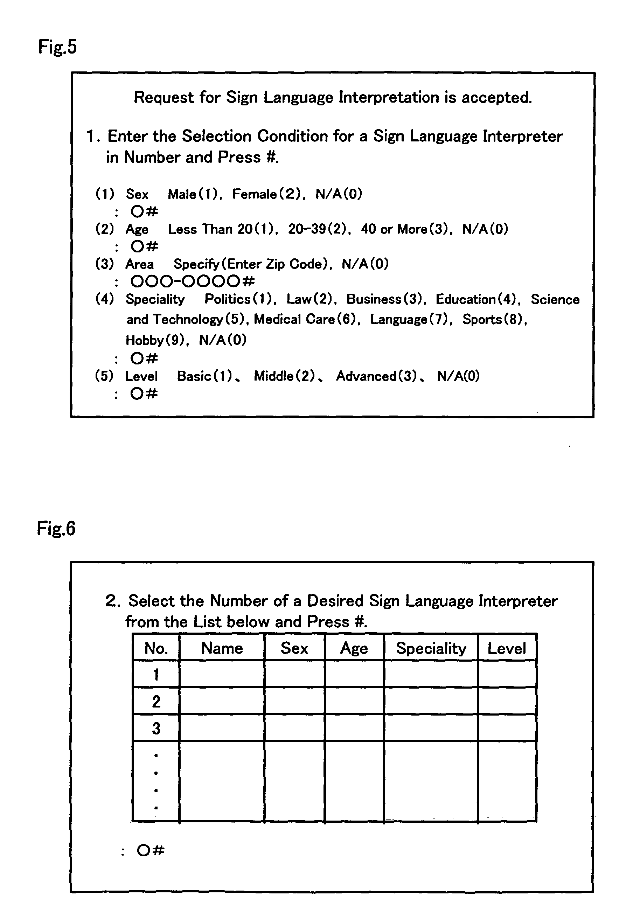

As shown in Fig. 3, it is first detected that the line I/F for the sign language interpretation recipient terminal 120 is called (S100). Next, the calling terminal displays a screen to prompt input of the selection conditions for a sign language interpreter shown in Fig. 5 (S102). The sign language interpreter selection conditions input by the caller are acquired (S104). The sign language interpreter selection conditions input by the caller are sex, age bracket, area, specialty and sign language level. A corresponding sign language interpreter is selected based on the sex, age, habitation, specialty, and sign language level registered in the sign language interpreter registration table. The area is specified by using a ZIP code and a sign language interpreter is selected starting with the habitation closest to the specified area. For any selections, in case it is not necessary to specify a condition, N/A may be selected.

Next, a sign language interpreter with availability flag set is selected from among the sign language interpreters satisfying the selection conditions acquired referring to the sign language interpreter registration table 182. The calling terminal displays a list of sign language interpreter candidates shown in Fig. 6 to prompt input of the selection number of a desired sign language interpreter (S106). The selection number of the sign language interpreter input by the caller is acquired (S108) and the terminal number of the selected sign language interpreter is extracted from the sign language interpreter registration table and the terminal is called (S110). When the sign language interpreter terminal has accepted the call (S112), a sign language interpretation service starts (S114).

In case the sign language interpreter terminal selected in S112 does not accept the call, whether a next candidate is available is determined (S116). In case a next candidate is available, execution returns to S110 and the procedure is repeated. Otherwise the calling terminal is notified as such and the call is released (S118).

While in case the selected sign language interpreter terminal does not accept the call, the caller is notified as such and the call is released in the above embodiment, a sign language interpretation reservation table to register a calling terminal number may be provided and the caller may be notified on a later response from the selected sign language interpreter to set a sign language interpretation service.

While the sign language interpretation system 100 comprises a line I/F, a multiplexer/demultiplexer, a video CODEC, an audio CODEC, a video synthesizer, an audio synthesizer and a controller in the above embodiment, these components need not be implemented by individual hardware (H/W) but the function of each component may be implemented based on software running on a computer.

While the sign language interpreter terminal 20, same as the sign language interpretation recipient terminal 10, is located outside the sign language interpretation center and called from the sign language interpretation center over a public telephone line to provide a sign language interpretation service in the above embodiment, the invention is not limited thereto but part or all of the sign language interpreters may be provided in the sign language interpretation center to provide a sign language interpretation service from the sign language interpretation center.

In the above embodiment, a sign language interpreter can present a sign language interpretation service anywhere he/she may be, as long as he/she has a terminal which can be connected to a public telephone line. Thus the sign language interpreter can provide a sign language interpretation service by using the availability flag to make efficient use of free time. By doing so, it is possible to stably operate a sign language interpretation service accompanied by a problem of difficult reservation of a sign language interpreter. In particular, the number of volunteer sign language interpreters is increasing nowadays. A volunteer who is available only irregularly can provide a sign language interpretation service by taking advantage of a limited free time.

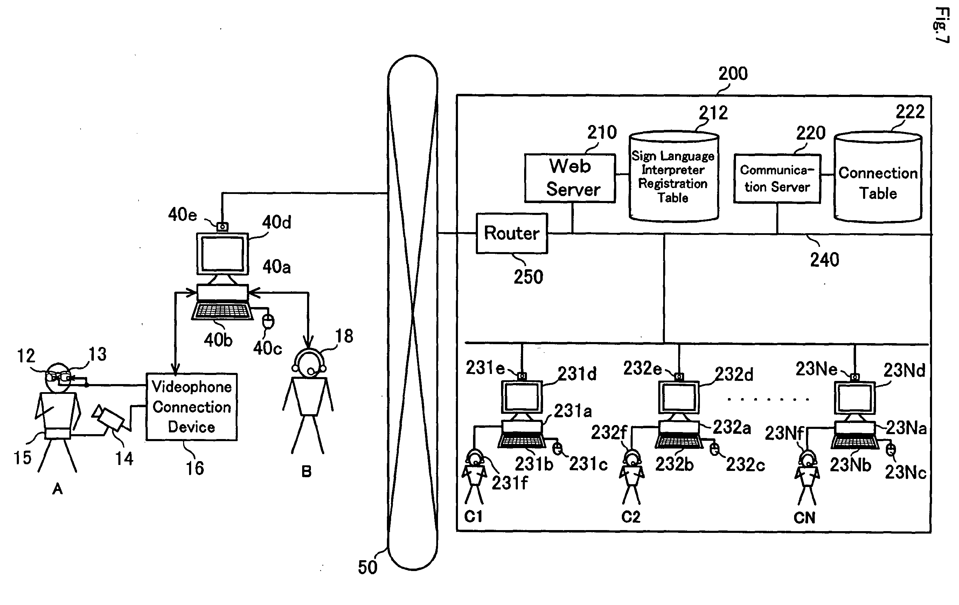

Fig. 7 is a system block diagram of a sign language interpretation system according to another embodiment of the invention. This embodiment shows a system configuration example assuming that each terminal used by sign language interpretation recipient and a sign language interpreter is an IP (Internet Protocol) type videophone terminal to connect to the Internet equipped with a web browser.

In Fig. 7, a numeral 200 represents a sign language interpretation system installed in a sign language interpretation center to provide a sign language interpretation service. The sign language interpretation system 200 connects a sign language interpretation recipient terminal 40 used by a deaf-mute person and a non-deaf-mute person and any of the sign language interpreter terminals used by a sign language interpreter 231, 232, ... via the Internet 50 in order to provide a sign language interpretation service for the conversation between the deaf-mute person and the non-deaf-mute person.

While the sign language interpretation recipient terminal 40 and the sign language interpreter terminals 231, 232,... each comprises a general-purpose processing device (a) such as a personal computer having a video input I/F function, an audio input/output I/F function and a network connection function, the processing device equipped with a keyboard (b) and a mouse (c) for input of information as well as a display (d) for displaying a web page screen presented by a web server 210 and a videophone screen supplied by a communications server 220, a television camera (e) for imaging the sign language of a sign language interpreter, and a headset (f) for performing audio input/output for the sign language interpreter, the processing device has IP videophone software and a web browser installed in this example, a dedicated videophone terminal may be used instead.

The videophone terminal connected to the Internet may be an IP videophone terminal based on ITU-T recommendation H.323, the invention is not limited thereto but may use a videophone terminal which employs a unique protocol.

The Internet may be of a wireless LAN type. The videophone terminal may be a cellular phone or a portable terminal equipped with a videophone function and also including a web access function.

The sign language interpretation system 200 comprises: a communications server 220 including a connection table 222 for setting the terminal addresses of a sign language interpretation recipient terminal and a sign language interpreter terminal as well as a function to interconnect the terminals registered in the connection table 222 and synthesize a video and an audio received from each terminal and transmit the synthesized video and audio to each terminal; a web server 210 including a sign language interpreter registration table 212 for registering the selection information, terminal address and availability flag of a sign language interpreter as mentioned earlier, as well as a function to select a desired sign language interpreter based on an access from a calling terminal by using a web browser and set the calling terminal and sign language interpreter terminal in the connection table 222 of the communication server 220; a router 250 for connecting the web server 210 and the communications server 220 to the Internet; and a plurality of sign language interpreter terminals 231, 232,..., 23N connected to the communications server 220 via a network.

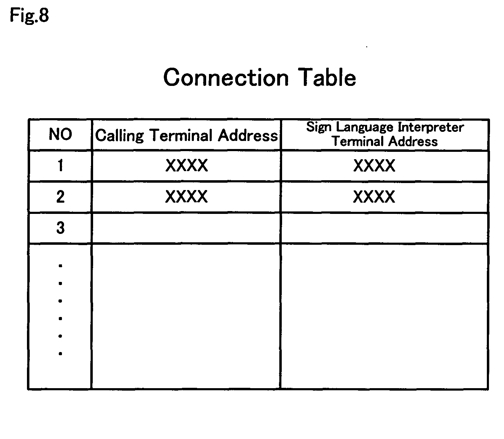

Fig. 8 shows an example of a connection table 222. As shown in Fig. 8, the terminal address of a calling terminal and the terminal address of a sign language interpreter terminal are registered as a set in the connection table 222. This provides a single sign language interpretation service. The connection table 222 is designed to register a plurality of such terminal address set depending on the throughput of the communications server 220, thereby simultaneously providing a plurality of sign language interpretation services.

While the terminal address registered in the connection table 222 is an address on the Internet and is generally an IP address, the invention is not limited thereto but for example a name given by a directory server may be used.

The communications server 220 performs packet communications using a predetermined protocol with the sign language interpretation recipient terminal and sign language interpreter terminal set to the connection table 222 and provides, by way of software processing, the functions similar to those provided by a multiplexer/demultiplexer 122, 142, a video CODEC 124, 144, an audio CODEC 126, 146, a video synthesizer 128, 148, in the above sign language interpretation system 100.

With this configuration, same as the sign language interpretation system 100, prescribed videos and audios are communicated between a sign language interpretation recipient terminal and a sign language interpreter terminal, and a sign language interpretation service is established for the conversation between the deaf-mute person and the non-deaf-mute person.

While the sign language interpretation system 100 uses the controller 180 and the telop memories 132, 152 to extract a term registered in the term registration table 184 during a sign language interpretation service based on an instruction from a terminal and displays the term as a telop on the terminal, the same function may be provided by way of software processing by the communications server 220 in this embodiment also. A term specified by each terminal may be displayed as a popup message on the other terminal by way of the web server 210. Or, a telop memory may be provided in the communications server 220 so that a term specified by each terminal via web browser will be written into the telop memory via the web server 210 and displayed as a text telop on each terminal.

While the sign language interpretation system 100 uses the controller 180 to interconnect a sign language interpretation recipient terminal and a sign language interpreter terminal, the connection procedure is made by the web server 210 in this embodiment because each terminal has a web access function.

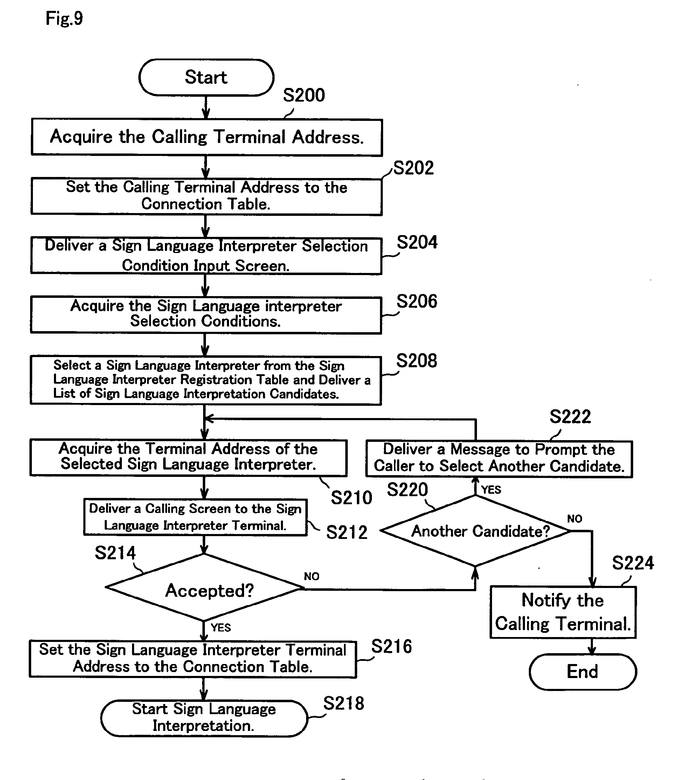

Fig. 9 is a processing flowchart of a connection procedure by the web server 210. A sign language interpretation recipient wishing to receive a sign language interpretation service accesses the web server 210 in the sign language interpretation center by using a web browser to log in from a sign language interpretation recipient terminal, which starts the acceptance of the sign language interpretation service.

As shown in Fig. 9, the web server 210 first acquires the terminal address of a caller (S200) and sets the terminal address to the connection table 222 (S202). Next, the web server delivers a screen to prompt input of the selection conditions for a sign language interpreter similar to that shown in Fig. 5 to the calling terminal (S204). The sign language interpreter selection conditions input by the caller are acquired (S206).

Next, a sign language interpreter with availability flag set is selected from among the sign language interpreters satisfying the selection conditions acquired from the sign language interpreter registration table 212. The web server 210 delivers a list of sign language interpreter candidates similar to that shown in Fig. 6 to the calling terminal to prompt input of the selection number of a desired sign language interpreter (S208). The selection number of the sign language interpreter input by the caller is acquired and the terminal address of the selected sign language interpreter is acquired from the sign language interpreter registration table 212 (S210). Based on the acquired terminal address of the sign language interpreter, the web server 210 delivers a calling screen to the sign language interpreter terminal (S212). In case the call is accepted by the sign language interpreter (S214), the terminal address of the sign language interpreter is set to the connection table 222 (S216) and the sign language interpretation service starts(S218).

In case the sign language interpreter terminal does not accept the call in S214, whether a next candidate is available is determined (S220). In case a next candidate is available, the web server delivers a message to prompt the caller to select another candidate (S222) to the calling terminal, then execution returns to S210. In case another candidate is not found, the web server notifies the calling terminal as such (S224) and the call is released.

While in case the selected sign language interpreter terminal does not accept the call, the caller is notified as such and the call is released in the above embodiment, a sign language interpretation reservation table to register a calling terminal address may be provided and the caller may be notified on a later response from the selected sign language interpreter to set a videophone conversation.

While the sign language interpreter terminal is located in the sign language interpretation system 200 of the sign language interpretation center in the above embodiment, the invention is not limited thereto but some or all of the sign language interpreter terminals may be provided outside the sign language interpretation center and connected via the Internet.

In the above embodiment, the configuration of the sign language interpretation system has been described for a case where a videophone terminal used by a sign language interpretation recipient or a sign language interpreter is a telephone-type videophone terminal connected to a public telephone line and a case where the videophone terminal is an IP-type videophone terminal connected to the Internet, the telephone-type videophone terminal and the IP-type videophone terminal can communicate with each other by arranging a gateway to perform protocol conversion therebetween. A sign language interpretation system conforming to one protocol may be provided via the gateway to support a videophone terminal which conforming to the other protocol.

In this way, the sign language interpretation system allows the user to enjoy or provide a sign language interpretation service anywhere he/she may be, as long as he/she has a terminal which can be connected to a public telephone line or the Internet. A sign language interpreter does not always have to visit a sign language interpretation center but can present a sign language interpretation from his/her home or a facility or site where a videophone terminal is located, or provide a sign language interpretation service by using a cellular phone or a portable terminal equipped with a videophone function.

A person with the ability of sign language interpretation may wish to register in the sign language interpreter registration table in the sign language interpretation center in order to provide a sign language interpretation service anytime when it is convenient to him/her. From the viewpoint of the operation of the sign language interpretation center, it is not necessary to summon sign language interpreters to the center. This allows efficient operation of the sign language interpretation center both in terms of time and costs. In particular, the number of volunteer sign language interpreters is increasing nowadays. The sign language interpretation service can be provided from a sign language interpreter's home, which facilitates reservation of a sign language interpreter.

### Industrial Applicability

As mentioned above, according to the invention, a deaf-mute person is able to get explanation by sign language while viewing the outer world by freely shifting his/her sight line.

## Claims

1. A sign language video presentation device comprising: sign language video receiving means for receiving a sign language video; display means for displaying a sign language video received by said sign language video receiving means; and fixing means for fixing said display means in front of the eyes of the deaf-mute person, **characterized in that** said deaf-mute person can view the sign language video received by the sign language video receiving means at the same time he/she views the outer world.

2. The sign language video presentation device according to claim 1, **characterized in that** said display means comprises a convex lens which can substantially focus on a sign language video displayed on said display means at the same time when said deaf-mute person views the outer world.

3. The sign language video presentation device according to claim 1 or 2, **characterized in that** said fixing means has a frame structure which can be fixed to the ears and nose of a deaf-mute person.

4. The sign language video presentation device according to any one of claims 1 through 3, **characterized in that** said sign language video receiving means comprises videophone connection means to be connected to a videophone terminal.

5. The sign language video presentation device according to claim 4, **characterized in that** said videophone connection means comprises radio communications means for performing radio communications with said videophone terminal.

6. A sign language video input/output device comprising the sign language video presentation device according to any one of claims 1 through 3, **characterized in that** said sign language video input/output device includes sign language imaging means for picking up the sign language of said deaf-mute person and sign language video transmission means for transmitting a sign language video picked up by said sign language video imaging means.

7. A sign language video input/output device comprising the sign language video presentation device according claim 4 or 5, **characterized in that** said sign language video input/output device includes sign language imaging means for picking up the sign language of said deaf-mute person and video transmission means for transmitting a sign language video picked up by said sign language imaging means to said videophone terminal.

8. The sign language video input/output device according to claim 7, **characterized in that** said sign language imaging means comprises waist fixing means to be fixed at the waist of said deaf-mute person.

9. A sign language interpretation system which provides sign language interpretation in case the sign language video input/output device according to claim 7 or 8 is used by a deaf-mute person capable of using sign language, audio input/output means connected to said videophone terminal is used by a non-deaf-mute person incapable of using sign language, and said videophone terminal and another videophone terminal used by a sign language interpreter are interconnected to allow said deaf-mute person to converse with said non-deaf-mute person, **characterized in that** said sign language interpretation system comprises connection means equipped with a sign language interpreter registration table where the terminal number of the videophone terminal used by a sign language interpreter is registered, said connection means including a function to accept a call from said videophone terminal used by said deaf-mute person and non-deaf-mute persons, a function to extract the terminal number of a sign language interpreter from said sign language interpreter registration table, and a function to call the videophone terminal used by a sign language interpreter by using said extracted terminal number of the sign language interpreter.

10. The sign language interpretation system according to claim 9, **characterized in that** selection information for selecting a sign language interpreter is registered in said sign language interpreter registration table and that said connection means includes a function to acquire the conditions for selecting a sign language interpreter from said calling videophone terminal and a function to extract the terminal number of a sign language interpreter who satisfies said acquired selection conditions for the sign language interpreter from said sign language interpreter registration table.
